# EUROPEAN PATENT APPLICATION

(11) **EP 3 553 779 A1**
(43) Date of publication of application: **16.10.2019**
(21) Application number: 18167035.7
(22) Date of filing: 12.04.2018
(51) Int. Cl.: G10L 25/48

(54) **DIGITAL ASSISTANT DEVICE ENHANCED VIRTUAL ASSISTANT**

(71) Applicant: Koninklijke Philips N.V., 5656 AE Eindhoven (NL)
(72) Inventor: TALGORN, Elise Claude Valentine, 5656 AE Eindhoven (NL); GEURTS, Lucas Jacobus Franciscus, 5656 AE Eindhoven (NL); TOSHNIWAL, Omna, 5656 AE Eindhoven (NL); BUIL, Vincentius Paulus, 5656 AE Eindhoven (NL); KHANNA, Sanya, 5656 AE Eindhoven (NL); SMITH, Callum, 5656 AE Eindhoven (NL)
(74) Representative: de Haan, Poul Erik

(57) **Abstract**

A digital assistant device includes a memory device configured to store an enhanced virtual assistant module and a processor configured to execute the enhanced virtual assistant module. The enhanced virtual assistant module, when executed by the processor, causes the processor to: identify a request act for which a user is expected to provide a response, determine a response imbalance score for the user based on a request difficulty score and a response capacity score, determine assistance for the user based on the response imbalance score, and provide the assistance.

## Description

### FIELD OF THE INVENTION

The following generally relates to a digital assistant device and more particularly to an enhanced virtual assistant of a digital assistant device and/or the digital assistant device with the enhanced virtual assistant.

### BACKGROUND OF THE INVENTION

A virtual assistant is a software agent (i.e. a computer program) executable by a (micro)processor-based device to perform certain functions. Examples of virtual assistants include, but are not limited to, Apple's Siri, Google Assistant, Amazon Alexa and Microsoft Cortana. Non-limiting examples of suitable (micro)processor-based devices include, but are not limited to, a personal computer (e.g., a desktop computer, etc.), a wearable computer (e.g., a smartwatch, an augmented reality viewer, etc.), a portable computer (e.g., a laptop, tablet, notebook, etc.), a handheld computer (e.g., a smartphone, a personal data assistant, etc.), a smart speaker, a smart television, etc. A microprocessor-based device with a virtual assistant is referred to herein as a digital assistant device.

Digital assistant devices are pervasive in many regions of the world. They are used, e.g., to assist humans. For instance, a user can ask an active digital assistant device a question such as "what is the weather today?," and the digital assistant device, with knowledge of its (i.e. the digital assistant device's) location, will access a suitable computing resource (e.g., a server, "cloud" based, etc. resource via the Internet, cellular, satellite, etc. communications) to determine an answer and provide the answer to the user (e.g., via visual display on a display monitor, digital voice through a speaker, etc.). In this example, the software agent includes an algorithm that is configured to distinguish questions from non-questions so that it can identify when it is asked a question and begin the retrieval and the answer process.

However, in some instances, the user could benefit from the assistance of the digital assistant device for non-question situations. Unfortunately, traditional virtual assistant software agents do not include algorithm(s) that can readily determine by themselves when it would be beneficial for the digital assistant device to assist in such instances and when it would better if the digital assistant device did not assist in such instances. Furthermore, users often do not want their digital assistant devices to become too invasive in their personal lives. Therefore, there is an unresolved need for an approach to extend the functionality of such digital assistant devices to overcome such shortcomings and/or other issues.

### SUMMARY OF THE INVENTION

Aspects described herein address the above-referenced problems and others.

In one aspect, a digital assistant device includes a memory device configured to store an enhanced virtual assistant module and a processor configured to execute the enhanced virtual assistant module. The enhanced virtual assistant module, when executed by the processor, causes the processor to: identify a request act for which a user is expected to provide a response, determine a response imbalance score for the user based on a request difficulty score and a response capacity score, determine assistance for the user based on the response imbalance score, and provide the assistance.

In another aspect, a method for providing assistance with a digital assistant device includes identifying a request act for which the user is expected to provide a response, determining a response imbalance score for the user based on a request difficulty score and a response capacity score, determining assistance for the user based on the response imbalance score, and providing the assistance.

In another aspect, a computer readable storage medium is encoded with computer readable instructions. The computer readable instructions, when executed by a processer, cause the processor to: identify a request act for which the user is expected to provide a response, determine a response imbalance score for the user based on a request difficulty score and a response capacity score, determine assistance for the user based on the response imbalance score, and provide the assistance.

These and other aspects of the invention are apparent from and will be elucidated with reference to the embodiments described hereinafter.

It will be appreciated by those skilled in the art that two or more of the above-mentioned options, implementations, and/or aspects of the invention may be combined in any way deemed useful. The invention may take form in various components and arrangements of components, and in various steps and arrangements of steps. The drawings are only for purposes of illustrating the embodiments and are not to be construed as limiting the invention.

### BRIEF DESCRIPTION OF THE DRAWINGS

These and other aspects of the system and the method according to the invention will be further elucidated and described with reference to the drawing, in which:
FIGURE 1 schematically illustrates an example system that includes a digital assistant device with an enhanced virtual assistant module.
FIGURE 2 schematically illustrates an example of the enhanced virtual assistant module.
FIGURE 3 illustrates an example flow chart for providing assistance with the digital assistant device of FIGURE 1 using the enhanced virtual assistant module of FIGURE 2.

### DETAILED DESCRIPTION OF EMBODIMENTS

The following describes an enhanced virtual assistant for a digital assistant device and/or the digital assistant device configured with the enhanced virtual assistant. In one instance, the enhanced virtual assistant is configured to intervene in an interaction between a user and one or more others only if needed, at a relevant moment and to a suitable degree. For example, the enhanced virtual assistant is configured to determine when the user of the digital assistant device is having difficulty in a conversion, and whether to aid and how much assistance the digital assistant device should provide to the user. In another instance, the enhanced virtual assistant is configured to intervene in an interaction between the assistant itself and the user. For example, where the enhanced virtual assistant is making requests to the user and the user is not responding in a satisfactory way, the enhanced virtual assistant provides assistance to the user.

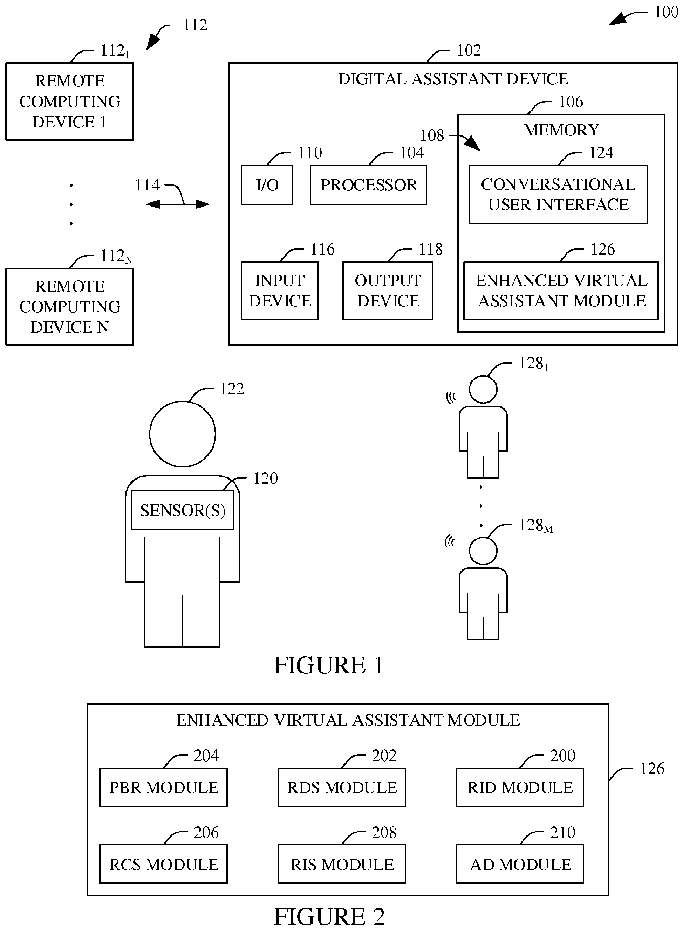

FIGURE 1 schematically illustrates an example system 100 including a digital assistant device 102. The digital assistant device 102 includes a processor 104 such as a central processing unit (CPU), a microprocessor, or the like. The digital assistant device 102 further includes a computer readable storage medium ("memory") 106 (which excludes transitory medium) such as physical memory and/or other non-transitory memory. The computer readable storage medium 106 includes computer readable instructions 108, and the processor 104 is configured to execute the computer readable instructions 108.

The digital assistant device 102 further includes input/output (I/O) 110. The I/O 110 provides communication between the digital assistant device 102 and one or more remote computing devices 112₁, ..., 112_{N} (collectively referred to as remote computing devices 112), where N is a positive integer equal to or greater than one, via a communication path 114. Examples of I/O 110 include a network card, a modem, a bus, a port, etc. The I/O 110 also provides communication with an input device 116 (e.g., a microphone, a video camera, etc.) and/or an output device 118 (e.g., a loudspeaker, a display monitor, etc.), which, in this example, are integrated into the device 102. In a variation, at least one of the input device 116 or the output device 118 is external and remote from the device 102.

In the illustrated example, the I/O 110 also provides communication with one or more sensors 120. In this example, the one or more sensors 120 are supported by a subject 122. In another instance, the I/O 110 concurrently communicates with another sensor support by another subject. In a variation, the one or more sensors 120 are remote from the subject and supported by another subject and/or object. In one instance, the one or more sensors 120 include a physiological sensor such as a heart rate, a blood pressure, an electrocardiography (ECG/EKG), a sweat, and/or other physiological sensor. Such sensors 120 can be applied directly to the subject (e.g., ECG electrodes) and/or carried by a carrier such as a wrist band, a wrist watch, a necklace, and/or other carrier. In a variation, the I/O 110 does not support communication with the one or more sensors 120.

The computer readable instructions 108 include a conversational user interface 124 and an enhanced virtual assistant module 126. In one instance, the conversational user interface 124 and the enhanced virtual assistant module 126 are separate sets of instructions. In another instance, the conversational user interface 124 and the enhanced virtual assistant module 126 are part of a same set of instructions. In a variation, the enhanced virtual assistant module 126 is remote from the digital assistant device 102 such as in a server, a "cloud," etc. The conversational user interface 124 includes a virtual assistant such as Apple's Siri, Google Assistant, Amazon Alexa, Microsoft Cortana and/or another virtual assistant. The enhanced virtual assistant module 126 extends functionality of the conversational user interface 124. As described in greater detail below, in one instance the enhanced virtual assistant module 126 is configured to determine when to intervene to assist the user 122 during an interaction with others 128₁, ..., 128_{M}, (collectively referred to as one or more others 128), where M is a positive integer equal to or greater than one, and the intervention.

As such, the combination of the conversational user interface 124 and the enhanced virtual assistant module 126 not only assists the user 122 with the questions the user 122 asks the digital assistant device 102, but also assists in other situations such as when the user 122 is interacting with the one or more of the others 128₁, ..., 128_{M}. This includes, e.g., determining when the user 122 of the digital assistant device 102 is having difficulty responding to verbal or other communication of the one or more others 128, whether to provide assistance to the user in response thereto, and, if so, how much assistance to provide to the user 122. The degree of assistance can be limited by the user 122 by setting a restriction while configuring the digital assistant device 102 with respect to how invasive the user 122 wants the digital assistant device 102 to be in their life.

The digital assistant device 102 can be at any one of a variety of locations. For example, in one instance the digital assistant device 102 is at a home of the user 122. In this instance, the digital assistant device 102 is configured to monitor a single room, multiple rooms or the entire house. In another instance, the digital assistant device 102 is embodied in a portable or wearable device such as a smartphone or smartwatch and carried with the user 122. In another instance, the digital assistant device 102 is at an office of a doctor of the user 122. In another instance, the digital assistant device 102 is in a motor vehicle of the user 122. In another instance, the digital assistant device 102 is distributed across a plurality of digital assistant devices where at least two of the digital assistant devices are at different locations.

The following provides non-limiting use cases of the digital assistant device 102.

In one use case, the digital assistant device 102 takes over tasks (e.g., scheduling an appointment, providing information, creating a reminder or a to-do-list, etc.) when the user 122 is overwhelmed or distracted. An example is a doctor consult where the doctor (e.g., other 128i) provides less than good information to the user 122 or discusses a serious condition with the user 122. In this scenario, the doctor often provides a lot of information to the user 122, and emotions of the user 122 can be overwhelming, which may make the user 122 unable to concentrate and/or answer even simple queries by the doctor and/or other care professional. In this scenario, in one instance, the digital assistant device makes decisions for the user 122 and confirms any decision later with the user 122 during a calmer moment of the user 122.

In another use case, the digital assistant device 102 intervenes during a multiuser discussion (e.g., with the others 128ⱼ and 128ₖ) for mediation when the user 122 is overwhelmed or embarrassed. This can be used for mediation on delicate topics such as life-threatening diseases. In this scenario, the digital assistant device 102 can take the role of a companion for the user 122 and/or relatives and/or friends of the user 122 that are also affected by the disease. For example, for the question: "Dad, how long do you have to live?" to the user 122 and the answer: "I don't really know" from the user 122, the digital assistant device 102 detects that the user 122 has difficulty answering and questioner would like a more satisfying answer (e.g. a child would like to have a more satisfying answer that fits the needs or understanding level of the child). After waiting a predetermined amount where the user 122 and questioner have not moved the discussion forward, the digital assistant device 102 can provide discussion triggers like a question and/or a video.

In another use case, the digital assistant device 102 provides assistance when the user 122 appears to be confused. For example, in the case where the user 122 is worried that the doctor will provide the less than good news in the consult, the digital assistant device 102 detects that the worry is not clear and that the user 122 hides another worry. Through discourse between the digital assistant device 102 and the user 122, the digital assistant device 102 can help the user 122 narrow down the worry prior to the consult, e.g., in order to ensure the time during the consult is used efficiently.

FIGURE 2 schematically illustrates an example of the enhanced virtual assistant module 126. In this example, the enhanced virtual assistant module 126 includes a request identifying (RID) module 200, a request difficulty score (RDS) module 202, a physiological and/or behavior response (PBR) module 204, a response capacity score (RCS) module 206, a response imbalance score (RIS) module 208, and an assistance determining (AD) module 210.

The RID 200 determines whether the user 122 is posed with an utterance for which a response is expected from the one or more others 128 and/or the digital assistant device 102. For this, the digital assistant device 102 uses a microphone of the input device 116. Alternatively, or additionally, speech detection and analysis software executing in a device such as a smart or cellular telephone, a wearable device, etc. worn by the user 122 records the utterance and transmits a signal indicative thereof to the digital assistant device 102.

In one instance, the RID 200 evaluates, in the background, ongoing dialogue and identifies utterances invoking such a response by the user 122. If such an utterance is not identified, the RID 200 continues to monitor for such utterances. If such an utterance is identified, the RDS module 202 and the PBR module 204 / RCS module 204 pair are invoked to perform the below described functions. In one instance, the RDS module 202 and the PBR module 204 / RCS module 204 pair are concurrently invoked. In another instance, the RDS module 202 and the PBR module 204 / RCS module 204 pair are serially invoked.

The RDS module 202 computes a request difficulty score based on a semantic analysis of the content of the request utterance, a scale of easy to complex and a user request difficulty profile, as described in greater detail below through example. The computed RDS provides a metric indicative of the difficulty of the request utterance. The RCS module 206 computes a response capacity score based at least on a physiological and/or behavioral response of the user 122 to the request utterance as determined by the PBR module 204 and a user response profile, as described in greater detail below through example.

The RIS module 208 computes a response imbalance score based at least on the RDS and the RCS. The RIS provides a metric indicative of whether the RCS is problematic given the RDS. The RIS provides a metric indicative of a current mental capacity state of the user 122 which provides an indication of an amount of involvement required by the digital assistant device 102, as described in greater detail below through example. In one instance, the health of the user 122 is taken into consideration. The AD module 210 determines appropriate assistance to provide to the user 122 based on the content of the utterance, the RIS, and user restrictions. The digital assistant device 102 provides the assistance to the user 122 based on a set of predetermined (types of) interventions.

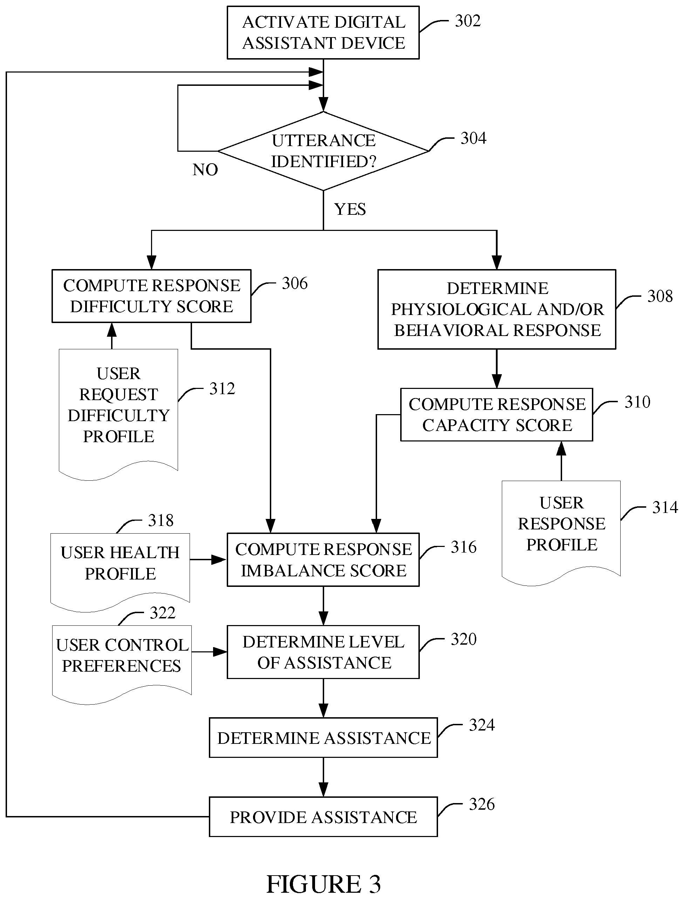

FIGURE 3 schematically illustrates an example flow chart for the enhanced virtual assistant module 126 in accordance with an embodiment herein.

For sake of brevity and/or clarity, deactivation (e.g., turning "off") of the digital assistant device 102 is not shown in this example. However, it is to be understood that the user 122 can deactivate the digital assistant device 102 at any time, which would terminate the illustrated flow. Furthermore, the digital assistant device 102 can implement multiple instances of the flow in parallel and/or in series, and concurrently and/or serially address multiple utterances, concurrently and/or serially for the user 122 and/or other users.

At 302, the digital assistant device 102 is activated. In one example, this is achieved by the user 122, another person and/or computer turning "on" the digital assistant device 102 and/or the enhanced virtual assistant module 126. This may be considered an on-demand mode that stays "on" until turned "off." In another example, the digital assistant device 102 includes a digital schedule which indicates a date(s)/time(s) to activate the enhanced virtual assistant module 126. The schedule may also include a deactivation date(s)/time(s) or "on" time duration.

At 304, the digital assistant device 102 determines whether the user 122 received a request utterance for which a response (e.g., an answer) is expected from the one or more others 128 and/or the digital assistant device 102. Examples of questions include, but are not limited to, "Do you prefer to have this appointment on Wednesday or Friday?;" "Do you exercise regularly?;" "Please bring your sports clothes next time;" "We need to talk about your treatment compliance...," and "I have pain there... but also I do not sleep so well... it's hard you know."

If such a request utterance is not identified, the digital assistant device 102 continues to monitor the dialog and check for such an utterance posed to the user 122 by the one or more others 128 and/or the digital assistant device 102 for which a response is expected. If such a request utterance is identified, at 306, the enhanced virtual assistant module 126 computes a RDS, and, at 308 and 310, respectively determines the physiological and/or behavioral response of the user to the request and computes a RCS based thereon.

The following provides an example of computing the RDS at 306.

As briefly discussed above, the enhanced virtual assistant module 126 semantically analyzes the utterance for predetermined characteristics. Examples of predetermined characteristics include, but are not limited to, expected memory usage, emotional charge, combining information, planning and imagining a situation in the future, and/or request complexity. One or more of these and/or other characteristics can be used to generate the request difficulty score.

For expected memory usage, the utterance "What did you do last weekend?" may be assigned a lower score compared to the utterance "When did you use the last of these medications?' since the latter utterance involved is more difficult. Example scores include: Low (score 1-3) for a question with no references to the past such as a question about today or at most the recent past such as yesterday's event; Medium (score 4-7) for a question with a reference to the recent past such as within the last several weeks; and High (score 8-10) for a question with a reference to the past.

For emotional charge, the utterance "Do you get upset or stressed a lot in busy weeks at work?" may be assigned a higher score compared to the utterance "Can you do these exercises this week?" since the former utterance is more emotionally charged. Example scores include: Low (score 1-3) for pure factual information or question; Medium (score 4-7) for a sentence that contains emotional words (e.g. referring to anger, depression or hurt), and High (score 8-10) for a reference to close family members/friends in combination with emotionally charged words.

For combining information, the single question "Could you bring your sports clothes next time?" is less complex than the compound sentence "When did you have pain in the morning when you didn't sleep well?" and may be assigned a lower score. Example scores include: Low (score 1-3) where one topic addressed in the sentence; Medium (score 4-7) for a combination of two topics in one question sentence, and High (score 8-10) when the user 122 needs to combine information of multiple elements or needs to analyze and look back (e.g. how often did you forgot your medication in the last month, and did you feel a negative effect?).

For planning and imagining a situation in the future, an utterance like "This kind of treatment requires a long rehabilitation program; are you able to follow this to get a good outcome?" demands more planning or thinking than the utterance "Can you do this exercise with your leg?" and may be assigned a higher score. Example scores include: Low (score 1-3) where the utterance includes no reference to the future; Medium (score 4-7) where the utterance includes a reference to the near future such as today or tomorrow, and High (score 8-10) where the utterance includes a future reference beyond a week.

For request complexity (e.g., sentence length and phrase complexity), an utterance can be a more complex sentence with sub sentences or even multiple sentences. Example scores include: Low (score 1-3) for an utterance where the request includes a simple short sentence; Medium (score 4-7) for an utterance where the request includes a sentence with sub sentences, and High (score 8-10) for an utterance where the request includes a combination of multiple sentences, e.g. an introduction is given before the real question is given.

In one instance, the enhanced virtual assistant module 126 computes the RDS by summing the individual expected memory usage, emotional charge, combining information, planning and imagining a situation in the future, and request complexity scores. The enhanced virtual assistant module 126 first multiplies each score with predetermined weight factors from a user request difficulty profile 312. The user request difficulty profile 312 reflects variation between individuals in aspects that make an utterance difficult. The weights could be determined via a psychological or other test in which a variety of utterances are made to the user 122, and the user 122 is requested to judge the difficulty. The weighted scores are averaged to produce RDS with a value on a scale from 1 to 10.

Table 1 below shows a non-limiting example of determining an RDS. As discussed above, one or more of expected memory usage, emotional charge, combining information, planning and imagining a situation in the future and/or request complexity, and/or other characteristic(s) can be used to generate the request difficulty score. In the example in Table 1, the RDS is computed for the user 122 as a summation of weighted expected memory usage, emotional charge, combining information, planning and imagining a situation in the future and/or request complexity scores, where the scores are first weighted with weights from the user request difficulty profile 312 of the user 122. In this example, the computed RDS is 4.30.

**Table 1. Request Difficulty Score (RDS).**

| Request Difficulty Score (RDS) | | | |
|---|---|---|---|
| Factor | Score | Weight | Total |
| Expected Memory Usage | 0.20 | 3 | 0.60 |
| Emotional Charge | 0.40 | 5 | 2.00 |
| Combining Information | 0.05 | 3 | 0.15 |
| Planning and future imagination | 0.10 | 8 | 0.80 |
| Request Complexity | 0.25 | 3 | 0.75 |
| Request Difficulty Score (RDS) | | | 4.30 |

In a variation, the user request difficulty profile 312 is omitted. In this instance, either no weights are applied, or a set of standard weights are applied. The standard weights can be based on previous weights, a set of weights determined for a population of users, empirically determined weights, theoretically determined weights, and/or other weights.

The following provides an example of determining the physiological and/or behavioral response at 308 and computing the RCS based thereon at 310. A behavioral response of the user 122 to the utterance can be sensed by the input device 116 and/or other device, e.g., where the input device 116 and/or another device include a microphone and/or a video camera.

Examples of behavioral responses that are analyzed with input recorded by a microphone include, but are not limited to, speech, absence of speech, a pause in speech (e.g., longer than 5 seconds for an "easy" query (appointment), longer than 20 second for a "difficult" query (emotional discussion), etc.), a sound indicating an indecision (e.g., "eeeh," scratching throat, swallowing, etc.), a tone of voice (e.g., loudness and speed of speech indicating an angry or panicked state), a contradiction (e.g., "Wednesday... no, Friday. No... Wednesday!"), and/or a keyword (e.g., "I don't know..." "Wait, let me think").

Examples of behavioral responses that can be analyzed with input recorded by a video camera include, but are not limited to, a gesture (e.g., nervous hand, scratching, eating nails, etc.), a posture (e.g., head down or turned away from interlocutor, body turns away or leans back from interlocutor, etc.), a facial expression (e.g., tense, confused, angry, unreactive, droopy eyes, flushing, etc.), and/or a gaze (e.g., not looking at interlocutor, rapid and/or random eye movement, etc.).

A physiological response of the user 122 to the utterance can be recorded by the sensor(s) 120 and/or another sensor. Examples of physiological responses that can be analyzed with phenomena sensed by the sensor(s) 120 and/or other sensor include, but are not limited to, a physiological signal, arousal via cortisol/skin conductance sensing, a heart rate, a breathing rate, face micro-blushes, and/or an EEG signal.

Further information can be derived from a combination of the behavioral response and the physiological response. For example, when a behavioral response (e.g., body language and/or speech) and physiological response (e.g., vital signs) do not match, a behavioral/ physiological contradiction response can be derived from the combination of the behavioral and physiological responses. An example includes a calm face and normal attitude and an increased heart rate.

In one instance, this derived information includes information hidden from and not readily perceivable by a human. A contradiction response can also be derived with information from the others 128 such as a care giver, other people in discussion, etc. This information can include any of behavioral and/or physiological responses described above and/or other behavioral and/or physiological responses. This information can indicate, e.g., that the other 128 is not satisfied by the answer given by the user, the answer is incomplete, etc.

The RCS metric indicates a degree of capacity (and hence incapacity) of the user 122. A lack of capacity can be due to, e.g., the user 122 being overwhelmed by information, emotions, lack of knowledge, embarrassment due to their own emotions or other people's emotions, temporary physiological inability (tiredness, drug or alcohol use, etc.), etc. Since people may react differently in situations of being incapable to respond to an utterance (e.g., some people may flush, others may look away, etc.), the computation of the RCS includes information from a user response profile 314.

In this example, the user response profile 314 includes weighing factors for physiological and behavioral responses. The weighing factors may be determined via a psychological and/or other test by which the user 122 is provided with multiple utterances that the user 122 is incapable to fulfill in various degrees. During the test the physiological and behavioral responses of the user 122 are observed. In relation to the presented utterance difficulties, an algorithm may learn how the user typically expresses incapability in response to requests.

Table 2 below shows a non-limiting example of determining an RCS. For this example, the RCS is computed by observing for the different types of responses of the user 122 to an utterance during a predetermined time period (e.g., 10 seconds), recording which of the responses are performed by the user 122 in the time period as a count, weighting each count with its corresponding weight to produce a weighted count, summing the weighted counts, dividing the summed value by the number of counts, and multiplying this value by a predetermined factor (e.g., 1, 10, etc.). The RCS has a value from 1 to 10, where 1 = fully capable and 10 = fully incapable.

**Table 2. Response Capacity Score (RCS).**

| Category | Response | Response Weight | Response Count | Weighted Count |
|---|---|---|---|---|
| Speech | Pauses > 5 s | 0.40 | 1 | 0.40 |
| | 'eeeh,' 'hmmm' | 0.90 | 0 | 0.00 |
| | Scrape throat | 0.05 | 0 | 0.00 |
| | Swallowing | 0.68 | 0 | 0.00 |
| | Stressed tone | 0.92 | 1 | 0.92 |
| | 'I don't know' | 0.92 | 0 | 0.00 |
| Gesture | Tremor in hand | 0.92 | 1 | 0.92 |
| | Scratching | 0.93 | 1 | 0.93 |
| | Eating nails | 0.33 | 1 | 0.33 |
| Posture | Head turned away | 0.68 | 0 | 0.00 |
| | Body turned away | 0.69 | 0 | 0.00 |
| Facial | Tense | 0.26 | 0 | 0.00 |
| | Angry | 0.07 | 1 | 0.07 |
| | Non-reaction | 0.38 | 0 | 0.00 |
| | Flushing | 0.13 | 1 | 0.13 |
| Gaze | Looking away | 0.80 | 0 | 0.00 |
| | Looking down | 0.75 | 1 | |
| | Rapid eye movement | 0.14 | 0 | 0.00 |
| Physiological | Skin conductance | 0.72 | 1 | 0.72 |
| | Heart rate | 0.80 | 0 | 0.00 |
| | Breathing rate | 0.78 | 0 | 0.00 |
| Total | | | 9 | 5.17 |
| Normalized Score (NS) | | | | 0.57 |
| Response Capacity Score (RCS) (NS*10) | | | | 5.74 |

In a variation, the user response profile 314 is omitted. In this instance, either no weights are applied, or a set of standard weights are applied. The standard weights can be based on previous weights, a set of weights determined for a population of users, empirically determined weights, theoretically determined weights, and/or other weights.

At 316, the RIS is computed using the RDS and RCS. In general, the RIS should be high when the user 122 is incapable (RCS is high=incapable) of responding to an easy request utterance (RDS is low). When the request utterance is difficult (RDS is high) then one can expect a higher RCS, but only a very high RCS should result in a high RIS. When RDS is low then one can expect a lower RCS is (low=capable) and a low RIS. Table 3 summarizes desired characteristics.

**Table 3. Desired Characteristics.**

| **RDS** | **RCS** | **RIS** |
|---|---|---|
| Easy | Fully Capable | Low |
| Easy | Half Capable | Medium/High |
| Easy | Fully Incapable | High |
| Moderate | Fully Capable | Low |
| Moderate | Half Capable | Medium |
| Moderate | Fully Incapable | High |
| Difficult | Fully Capable | Low |
| Difficult | Half Capable | Medium/Low |
| Difficult | Fully Incapable | High |

The following example formula can be used to implement these characteristics in a RIS metric: RIS = MAX (RCS - C□RDS, 1), where C is a determined constant and the MAX function returns the larger of the two input arguments, (RCS - C□RDS) or 1. For the RDS in the example in Table 1, the RCS in the example in Table 2, and C = ¼, the RIS = 4.3 - 5.74/4 = 2.87. The value of C is programmable and can be changed based on the user 122, etc. Table 4 presents a non-limiting example using this Max function with C = ¼.

**Table 4. Example with C = ¼.**

| **RDS** | **RCS** | **RIS** |
|---|---|---|
| 10 | 10 | 7.50 |
| 10 | 1 | 1.00 |
| 4 | 10 | 9.00 |
| 8 | 8 | 6.00 |
| 5 | 1 | 1.00 |
| 1 | 10 | 9.75 |
| 1 | 1 | 1.00 |

In a variation, and as shown in the illustrated example, a health condition of the user 122 from a user health profile 318 can also be used to compute the response imbalance score, as the health condition of the user 122 may impact the user's capacity to respond to an utterance. For example, if the user 122 is fatigued, in pain, sleep deprived, in a bad mood, affected by prior stress events (physiological signals such as heartrate variation or skin response can be used to estimate cortisol level, indicative of stress, etc.), etc., this may impact his response to utterances, even if they have a low difficulty score. In one instance, the user health profile 318 indicates how the user's response incapacity is affected by health condition, next to the request difficulty score.

This information can be acquired over time to learn what RCS it can expect in relation to a RDS while the user is in a relatively good health condition. If the user is less capable to react than is to be expected given the request difficulty, then this may be caused by a (temporary) decline in health condition (physical, mental and/or emotional). Also, the history RCS's, and how much they vary with variation in request difficulty can give an indication of declined health condition. For example, if the user in general seems less capable to answer even easier questions, then this may be an indication of a declined health condition.

At 320, the digital assistant device 102 determines a level of assistance based on user control preferences 322 of the user 122. In a variation, the user control preferences 322 are omitted.

In one instance, the user 122 specifies in the user control preferences 322 a maximum degree of involvement by the digital assistant device 102. Non-limiting examples include, but are not limited to, provides a suggestion, a reminder, or a discussion trigger via voice, sound, text, image, video, etc. Examples of these include the message "Wednesday you often do the groceries; Friday might be better," setting up an automatic reminder to bring sport clothes the morning before the next appointment, asking an extra question such as "Do you remember if you took your medication yesterday?," and providing an explanatory video about treatment compliance and effectiveness.

Other Non-limiting examples include, but are not limited to, making a decision with a concrete effect. Examples of this include indicating in the doctor's scheduling tool "Please make the appointment for Friday," ordering some sport clothes because he knows that the user does not own any, and calling an Uber to bring the user home. Other Non-limiting examples include, but are not limited to, overruling a decision of the user 122. Examples of this include recording the user 122 saying "Wednesday is good" but because the user 122 is in a confused state and will be busy that day, indicating in the doctor's scheduling tool "Wednesday will be busy, I will make the appointment for Friday," and locking the car of the user 122.

The user control preferences 322 act as a restriction to the level of assistance that the digital assistant device 102 can provide. For example, if the user 122 never wants the digital assistant device 102 to take any action without directly informing the user 122, then the user's control preference would be set to a level that indicate the digital assistant device 102 level of involvement cannot exceed, e.g., take action and inform. If the user 122 is more conservative then the user 122 may not allow the digital assistant device 102 to take any action on behalf of the user 122, only allowing suggestions that the user 122 may or may follow.

At 324, the digital assistant device 102 determines the assistance based on the utterance, the level of assistance, and an intervention for the utterance at the level of assistance. Table 5 shows a plurality of examples of assistance (interventions) for different utterances, RIS's, and levels of assistance.

**Table 5. Assistance.**

| **Request** | **RIS** | **Level of Involvement** | **Intervention** |
|---|---|---|---|
| The user receives results from a medical test, and is hesitating to open it | 6 | 3-Extra information | Digital assistant initiates a conversation encouraging and suggesting the user to read the report without further delay |
| User learns that the tumor is cancerous and is in shock. Virtual assistant asks the user if his spouse needs to be notified. | 7 | 4-Take action and inform | User promptly refuses to inform anyone. However, the digital assistant decides to notify (send a message) to the spouse of the user. Informing that user is in need of emotional support. |
| The Healthcare professional has requested for an appointment to discuss the diagnosis and treatment | 7 | 4-Take action and inform | Digital assistant finds an appropriate time within the user's agenda and makes an appointment with the physician. Communicates its details to the User. |
| Friends and family visit user to offer support and learn about the recent test results. Upon revealing the results, there is silence and remorse in the room. | 5 | 3-Extra information | Digital assistant acts upon the situation and shares information with everyone about his condition, what it means and the next steps in treatment. |
| Alone at home, the user feels weak and dizzy, almost falling down to the ground | 10 | 5-Take action only | Digital assistant immediately informs and shares user's data with the informal care giver and the doctor about the situation |

Where the digital assistant device 102 made a temporary decision (e.g., involvement level 4 or 5), the digital assistant device 102 may later confirm this decision with the user 122 and possibly change the decision when the user 122 is likely more capable to respond to the request. For this, the digital assistant device 102 may keep track of the RIS's over time and monitor them for when they drop below a predetermined threshold and only then engage with the user 122 again on a decision made earlier. In generally, the decision is checked at a moment where the user 122 is not conducting another activity, like watching television, in a conversation, playing a sport, etc., which can be monitored using known approaches.

As indicated above, the digital assistant device 102 can implement multiple instances of the flow described in FIGURE 3 in parallel and/or in series, and concurrently and/or serially address multiple utterances, concurrently and/or serially for the user 122 and/or other users. The flow in FIGURE 3 is described in connection with one instance for the user 122. FIGURE 3 further shows a subsequent iteration after the providing assistance at 326 where the digital assistant device polls for a next utterance for which a response is expected in the decision block 304. In one instance, the next identified utterance is not related to the prior identified utterance and similar flow is executed. In another instance, the next identified utterance is related to or the same as the prior identified utterance. In this instance, information of the previous loop can also be used to compute any of the RDS, RCS and/or RIS, and/or determine the assistance.

The following illustrates an example emergency response service use case. Within this service, a frail elderly wears a fall detection unit which, in case of a fall, automatically connects the elderly to an emergency response service via his telephone line. The service employee on the other side then tries to estimate the condition of the elderly in order to organize the appropriate response. This can extend from doing nothing to sending an ambulance. In one instance, the digital assistant device 102 described herein performs this triage task. This could lower work load on the emergency response service.

By way of example, in case the elderly falls, the digital assistant device 102 asks the elderly if he/she is okay. In this example, this is an easy question, with a RDS of 1. The response of the elderly is analyzed via the parameters described in Table 2 to arrive at a RIS. Depending on the RIS, the digital assistant device 102 takes action according to a specific version of Table 5, as shown below in Table 6. Optionally, the digital assistant device 102 follows up by asking more difficult questions to assess if the elderly's cognitive abilities have been affected by the fall.

**Table 6. Assistance.**

| RIS | RIS Description | Level of Involvement | Response Type | Response Description |
|---|---|---|---|---|
| 1-2 | Fully capable | 1 | Confirmation | Assistant confirms and acts upon the user's response, e.g., "I am glad to hear you are fine. Let me know if I can be of any further assistance." |
| 3-4 | Less capable | 2 | Rephrasing | Assistant rephrases the request, in attempt to make it clearer, and waits for further input, e.g., "It seems you have fallen. Are you feeling ok?" |
| 5-6 | Not so capable | 3 | Extra Information | Assistant provides extra information, or suggest a response / action, and waits for further input, e.g., "It seems you hurt yourself. Shall I call your partner / relative for you?" |
| 7-8 | Hardly capable | 4 | Action & Inform | Assistant takes a decision /action, possibly overruling the user's response, and informs the user, e.g., "I am calling the emergency response service for you and I will inform your partner / relative" |
| 9-10 | Incapable | 5 | Action only | Assistant takes a decision / action without informing the user (at the moment), e.g., The assistant calls an ambulance, informs the emergency response service, and calls a designated other |

In another instance, instead of taking over the triage task from the emergency response service employee, the digital assistant device 102 provides decision support to the emergency response service employee. This could be done by providing the RIS derived from assessing the conversation and physiological responses, and advice on response actions to the employee, instead of having a conversation with the elderly.

Although the above is described with particular application to a verbal utterance (e.g., posed to a user for which the user is expected to provide a response), it is to be understood that the request could alternatively, or additionally, be an observable task that the user starts or is expected to perform. Non-limiting examples include, but are not limited to, a user attempting to withdraw money from an automated teller machine (ATM), a doorbell rings and the user is expected to open the door, a telephone rings and user is expected to answer it, and the user is attempting to make coffee or meal. The task can be observed by sensors (e.g. in-home sensors or cameras) and/or otherwise. In this instance, the request difficulty score relates to the task difficulty as experienced by the user. As utilized herein, a request act includes, but it not limited to, a verbal utterance, an observable task that the user starts, and/or an observable task that the user is expected to perform.

The method(s) described herein may be implemented by way of computer readable instructions, encoded or embedded on computer readable storage medium (which excludes transitory medium), which, when executed by a computer processor(s) (e.g., CPU, microprocessor, etc.), cause the processor(s) to carry out acts described herein. Additionally, or alternatively, at least one of the computer readable instructions is carried by a signal, carrier wave or other transitory medium, which is not computer readable storage medium.

While the invention has been illustrated and described in detail in the drawings and foregoing description, such illustration and description are to be considered illustrative or exemplary and not restrictive; the invention is not limited to the disclosed embodiments. Other variations to the disclosed embodiments can be understood and effected by those skilled in the art in practicing the claimed invention, from a study of the drawings, the disclosure, and the appended claims.

In the claims, the word "comprising" does not exclude other elements or steps, and the indefinite article "a" or "an" does not exclude a plurality. A single processor or other unit may fulfill the functions of several items recited in the claims. The mere fact that certain measures are recited in mutually different dependent claims does not indicate that a combination of these measured cannot be used to advantage.

A computer program may be stored/distributed on a suitable medium, such as an optical storage medium or a solid-state medium supplied together with or as part of other hardware, but may also be distributed in other forms, such as via the Internet or other wired or wireless telecommunication systems. Any reference signs in the claims should not be construed as limiting the scope.

## Claims

1. A digital assistant device, comprising:
a memory device configured to store an enhanced virtual assistant module; and
a processor configured to execute the enhanced virtual assistant module, which causes the processor to:
identify a request act for which a user is expected to provide a response;
determine a response imbalance score for the user;
determine assistance for the user based on the response imbalance score; and
provide the assistance.

2. The device of claim 1, wherein the response imbalance score is determined based on a request difficulty score and a response capacity score.

3. The device of claim 2, wherein the processor determines the request difficulty score by:
determining individual scores for the request act based on a set of predetermined difficulty criteria;
multiplying each of the individual scores by a corresponding difficulty weighting factor; and
summing the weighted individual scores.

4. The device of claim 3, wherein the set of predetermined difficulty criteria includes one or more of: an expected memory usage, an emotional charge, a combining information, a planning and imagining a situation in the future, and a request complexity.

5. The device of any of claims 1 to 4, wherein the processor determines the response capacity score by:
identifying responses of the user to the request act;
setting a count value for each identified response;
multiplying each count with a corresponding capacity weighting factor;
summing the weighted counts; and
normalizing the summed value by dividing the summed value by a total number of the counts.

6. The device of any of claim 5, wherein the processor determines the response imbalance score by:
weighting at least one of the request difficulty score and the response capacity score with a weighting factor;
determining a difference between the at least one weighted request difficulty score and the response capacity score;
comparing the difference with a predetermined threshold; and
assigning a greater of the difference and the threshold to the response imbalance score.

7. The device of claim 6, wherein the processor determines the response imbalance score based on a health condition of the user and a user health profile, which indicates how the response capacity score of the user is affected by a health condition of the user.

8. The device of any of claims 1 to 7, wherein the processor determines a level of assistance from user control preferences which indicate a maximum permissible degree of involvement by the digital assistant device, and determines the assistance for the user further based on the determined level of assistance.

9. A computer implemented method for providing assistance with a digital assistant device, the method comprising:
identifying a request act for which the user is expected to provide a response;
determining a response imbalance score for the user;
determining assistance for the user based on the response imbalance score; and
providing the assistance.

10. The method of claim 9, wherein the response imbalance score is determined based on a request difficulty score and a response capacity score.

11. The method of claim 10, further comprising determining the request difficulty score by:
determining individual scores for the request act based on a set of predetermined difficulty criteria;
multiplying each of the individual scores by a corresponding difficulty weighting factor; and
summing the weighted individual scores.

12. The method of claim 11, wherein the set of predetermined difficulty criteria includes one or more of: an expected memory usage, an emotional charge, a combining information, a planning and imagining a situation in the future, and a request complexity.

13. The method of any of claims 9 to 12, further comprising determining the response capacity score by:
identifying responses of the user to the request act;
setting a count value for each identified response;
multiplying each count with a corresponding capacity weighting factor;
summing the weighted counts; and
normalizing the summed value by dividing the summed value by a total number of the counts.

14. The method of claim 13, further comprising determining the response imbalance score by:
weighting at least one of the request difficulty score and the response capacity score with a weighting factor;
determining a difference between the at least one weighted request difficulty score and the response capacity score;
comparing the difference with a predetermined threshold; and
assigning a greater of the difference and the threshold to the response imbalance score.

15. The method of claim 14, wherein determining the response imbalance score includes:
using a health condition of the user and a user health profile, which indicates how the response capacity score of the user is affected by a health condition of the user.

16. A computer readable storage medium encoded with computer readable instructions, which, when executed by a processor of a computing system, causes the processor to execute the method of any of claims 11 to 15.
